# EUROPÄISCHE PATENTSCHRIFT

(11) **EP 0 940 289 B1**
(45) Veröffentlichungstag und Bekanntmachung des Hinweises auf die Patenterteilung: **19.05.2004**
(21) Anmeldenummer: 99102673.3
(22) Anmeldetag: 12.02.1999
(51) Int. Cl.: B60N 2/44

(54) **Sitzanordnung für Fahrzeuge mit einem eine Halterungsaussparung, wie eine Durchladeaussparung einer Durchladeeinrichtung od. dgl., bildenden modulartigen Einbauteil**
Vehicle seat arrangement with a modular insert which forms a holding opening such as a loading opening
Agencement de siège de véhicule à insert modulaire formant un évidement de maintien comme un évidement de chargement

(30) Priorität: 02.03.1998 DE 19808404
(43) Veröffentlichungstag der Anmeldung: 08.09.1999
(73) Patentinhaber: BOS GmbH & Co. KG, 73760 Ostfildern (DE)
(72) Erfinder: Sitzler, Wolfgang, 42111 Wuppertal (DE); Ledüc, Peter, 40468 Düsseldorf (DE)
(74) Vertreter: Patentanwälte Ostriga & Sonnet

(56) Entgegenhaltungen:
- EP-A- 0 860 319
- WO-A-97/28019
- DE-A- 3 436 509
- DE-C- 4 015 872
- DE-U- 29 615 813
- GB-A- 2 313 542
- PATENT ABSTRACTS OF JAPAN vol. 1996, no. 06, 28. Juni 1996 (1996-06-28) & JP 08 038308 A (NISSAN MOTOR CO LTD), 13. Februar 1996 (1996-02-13)

## Beschreibung

Die Erfindung betrifft eine Sitzanordnung entsprechend dem Oberbegriff des Anspruchs 1. Eine solche Sitzanordnung ist in der DE 296 15 813 U1 beschrieben.

Bei der bekannten Sitzanordnung ist ein modulartiges Einbauteil von der Rückseite der Sitzlehne her durch deren Tragkonstruktion hindurchgesteckt. Das Einbauteil umgrenzt die Durchladeaussparung einer Durchladeeinrichtung und bildet für letztere ein stabiles Widerlager. Zugleich lagert das Einbauteil eine mit verschiedenen Zusatzfunktionen ausgestattete Armlehne.

Zur Freigabe der Durchladeaussparung wird die Armlehne in ihre etwa horizontale Betriebsposition nach vorn geschwenkt. Wenn die Durchladeeinrichtung nicht benötigt wird, wird die Armlehne in ihre aufrechte Ruheposition zurückgeklappt, verschließt dabei die Durchladeaussparung und bildet nun mit ihrer Unterfläche eine mit der benachbarten Sitzlehnen-Hauptfläche bündige Teilfläche, die es ermöglicht, daß, z.B. bei einer dreisitzigen Fondsitzanordnung, eine dritte Person den mittleren Sitz benutzen kann.

Für den Fall, daß dieser mittlere Sitz mit einer Kopfstütze versehen werden soll, wird diese üblicher Weise in der Lehnenkonstruktion oberhalb des modulartigen Einbauteils verankert, was indessen wegen des verbleibenden eingeschränkten Einbauraumes eine spezielle Verstärkung der Lehnenkonstruktion, und damit einen relativ großen Bau- und Montageaufwand, erfordert.

Von der DE 34 36 509 A1 ist eine Fondsitzanordnung mit relativ zueinander querverschieblichen Außensitzen bekannt. Eine Durchladeeinrichtung, ein Mittelsitzteil sowie ein mittleres Sitzlehnenteil stellen dabei jeweils für sich separate Komponenten dar.

Ausgehend von der Sitzanordnung gemäß der DE 296 15 813 U1, liegt der Erfindung die Aufgabe zugrunde, die bekannte Sitzanordnung so weiterzuentwickeln, daß diese unter Beibehaltung der stabilen Bauweise des Einbauteils eine noch weitergehend vereinfachte Montage gestattet.

Entsprechend der Erfindung wird diese Aufgabe dadurch gelöst, daß das Einbauteil sich im wesentlichen über die gesamte Höhe der Sitzlehne erstreckt und daß das Einbauteil eine Halterungsstruktur für die Kopfstütze bildet.

Dadurch, daß sich entsprechend der Erfindung sich das Einbauteil im wesentlichen über die gesamte Höhe der Sitzlehne erstreckt, wird die stabile Rahmenkonstruktion, die zuvor entsprechend der DE 296 15 813 U1 im wesentlichen der Durchladeeinrichtung zugute kam, über einen größeren Höhenbereich der Sitzlehne ausgedehnt. Damit hat die Erfindung auch die Voraussetzung dafür geschaffen, daß das modulartige Einbauteil zur sicheren Halterung einer Kopfstütze geeignet ist.

Für den Fall, daß das modulartige Einbauteil rahmenartig ausgebildet ist, kann es eine umlaufend geschlossene oder eine offene Rahmenbauweise (U-förmig, C-förmig) aufweisen.

Im Unterschied zum Bekannten ist es entsprechend der Erfindung nicht mehr erforderlich, die Sitzlehnenkonstruktion oberhalb der Durchladeaussparung baulich anzupassen, insbesondere zu verstärken, da entsprechend der Erfindung ausschließlich das stabile Einbauteil als Halterungsstruktur für die Kopfstütze zur Verfügung steht.

Die erfindungsgemäße Sitzanordnung gestattet auch eine einfache Montage, zumal das erfindungsgemäße Einbauteil als komplette Baugruppe neben beispielsweise einer Armlehne und einem Skisack od. dgl. auch zugleich die fertig montierte Kopfstütze enthält.

Zwei Bauvarianten für die erfindungsgemäße Sitzanordnung sind unter anderem denkbar: die Sitzlehnenkonstruktion bildet eine Aussparung, welche mindestens einen Teilhöhenbereich des Einbauteils aufnimmt.

Andererseits bildet das Einbauteil die komplette Tragkonstruktion für eine sich über die gesamte Sitzlehnenhöhe erstreckende, eine diskrete Baugruppe darstellende, ansonsten vollständige Teilsitzlehne, wobei letztere klappbar oder starr angeordnet sein könnte.

Weitere Erfindungsmerkmale sind den Unteransprüchen zu entnehmen.

In den Zeichnungen sind bevorzugte Ausführungsbeispiele entsprechend der Erfindung dargestellt, es zeigt
Fig. 1 in teilweise auseinandergezogener Darstellung ein modulartiges Einbauteil,
Fig. 2 das Einbauteil gemäß Fig. 1 vormontiert,
Fig. 3 das Einbauteil entsprechend den Fig. 1 und 2 in einer rückwärtigen Ansicht in zum Teil auseinandergezogener Darstellung,
Fig. 4 das Einbauteil gemäß Fig. 2 vor der fahrzeugseitigen Montage,
Fig. 5 das Einbauteil gemäß Fig. 4 nach der fahrzeugseitigen Montage,
Fig. 6 eine abgewandelte Ausführungsform eines Einbauteils in teilweise auseinandergezogener Darstellung,
Fig. 7 das Einbauteil gemäß Fig. 6 im vormontierten Zustand,
Fig. 8 das Einbauteil gemäß Fig. 6 vor der fahrzeugseitigen Montage,
Fig. 9 das Einbauteil gemäß Fig. 5 in unterschiedlichen Höhenstellungen eines Ausstattungsteils (Armlehne) und
Fig. 10 in Abwandlung der Darstellung gemäß Fig. 9 ein zusätzliches Ausstattungsteil (Skisack) in dessen Betriebsposition.

In den Zeichnungen sind vergleichbare Bauteile trotz baulicher Unterschiede mit denselben Bezugszeichen versehen.

Ein modulartiges Einbauteil 11 für eine Sitzanordnung 10, im vorliegenden Fall für eine Fondsitzanordnung 10, weist einen Rahmen 12 auf, der eine Halterungsaussparung 13 umgibt. Der Rahmen 12 weist zwei im Parallelabstand voneinander distanzierte horizontale Querschenkel, einen unteren Querschenkel 15 und einen oberen Querschenkel 14, auf. Beide Querschenkel 14, 15 sind mittels zweier im Parallelabstand voneinander angeordneter Längsschenkel 16, 17 miteinander verbunden.

Dem oberen Querschenkel 14 ist ein Einbaufeld E zur Befestigung einer insgesamt mit 18 bezeichneten Kopfstütze zugeordnet.

Die Querschenkel 14, 15 sowie die Längsschenkel 16, 17 des Rahmens 12 sind, jeweils für sich gesehen, plattenartige Bauteile, welche in einer Ebene angeordnet sind, so daß der Rahmen 12 insgesamt ein Grundbauteil in Form eines sich im wesentlichen in einer Ebene erstreckenden plattenartigen Bauteils darstellt.

Senkrecht zu den plattenartigen Schenkeln 14-17 ist etwa am unteren Rand des oberen Querschenkels 14 eine ebenfalls plattenartige Konsole 19 angeordnet, welche eine Steckhalterung 20 mit zwei Einsteckkanälen 21 zur Aufnahme je einer Kopfstützentragstange 22 aufweist.

Seitlich an den beiden plattenartigen Längsschenkeln 16, 17 ist jeweils eine Seitenwange 23, 24 befestigt. Die unteren Enden der beiden Seitenwangen 23, 24 sind mittels einer Querwange 25 miteinander verbunden.

Die beiden Seitenwangen 23, 24 bilden in ihren unteren Bereichen jeweils längliche vertikale Führungen 26, 27 einer Höhenverstelleinrichtung für die Schwenkachse 28 einer in einer vertikalen Ebene klapp- bzw. schwenkbaren Armlehne 29.

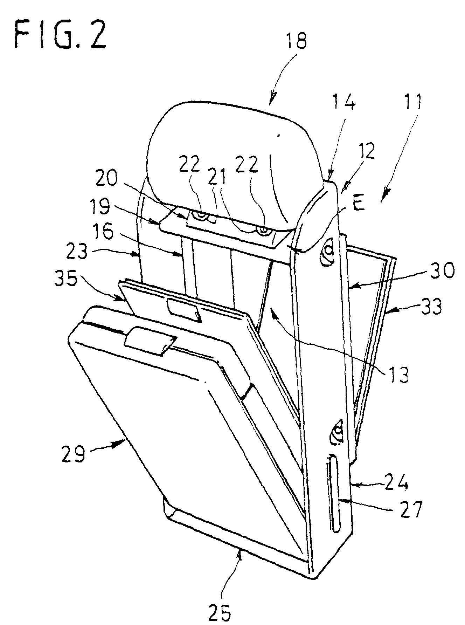

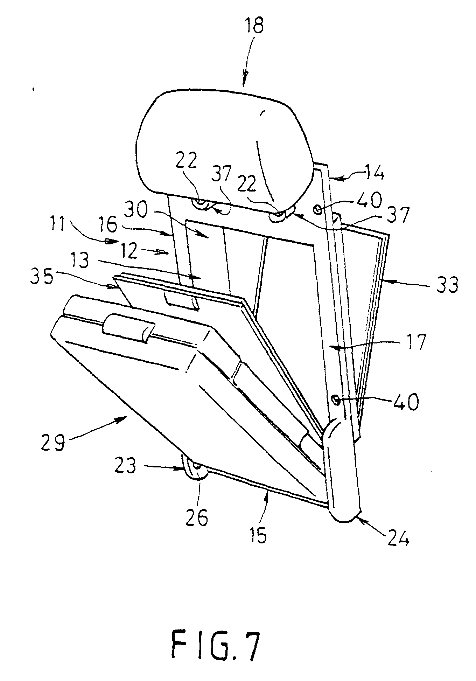

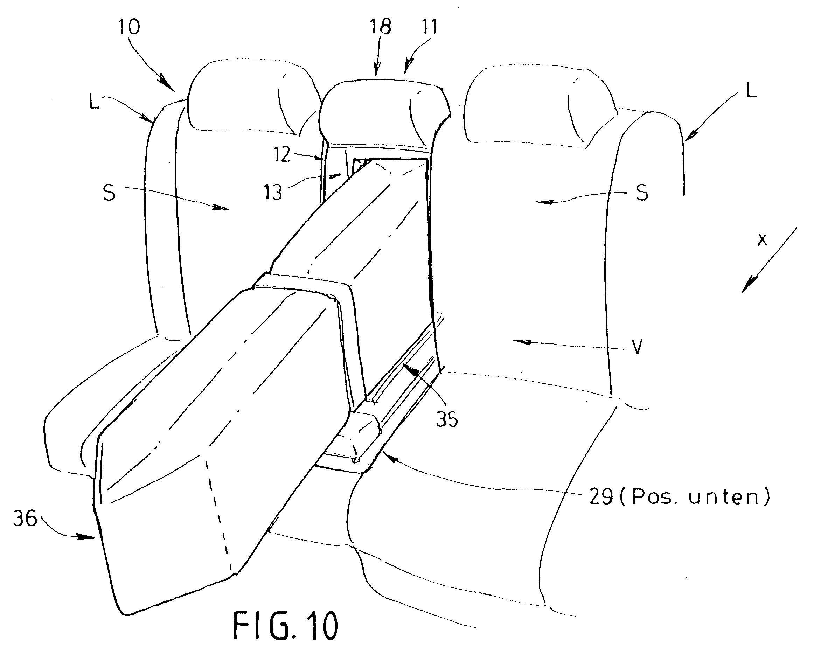

Der obere Bereich des Einbauteils 11 bildet in der Höhe des Einbaufeldes E zugleich einen Aufnahmeraum für ein Teilvolumen der Kopfstütze 18, wenn sich diese in ihrer untersten Stellung bzw. in ihrer Betriebsposition befindet (vgl. Fig. 2, Fig. 4, Fig 5, Fig. 7, Fig 9, Fig. 10).

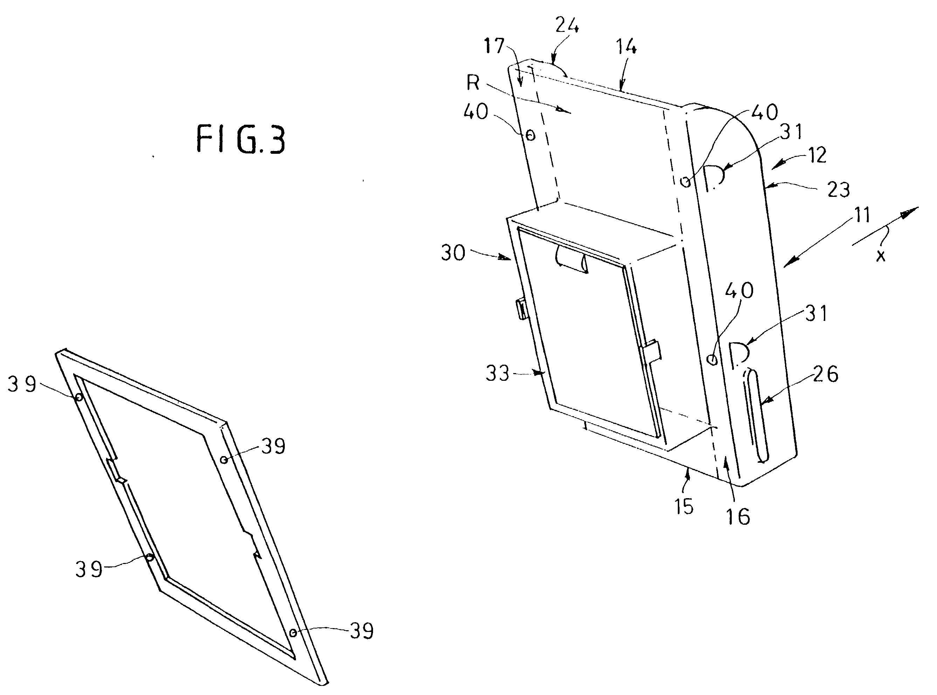

Die Führungen 26, 27 sind zweckmäßig so ausgebildet, daß sie eine stufenweise bzw. stufenlose Höhenverstellarretierung der Schwenkachse 28 der Armlehne 29 gestatten. Im Zusammenhang insbesondere der Fig. 3, 4, 5 sowie 8 und 9 wird deutlich, in welcher Beziehung sich das Einbauteil 11 zur Sitzanordnung 10 insgesamt befindet:

Von der Vorderseite V her einer Sitzlehne L wird das Einbauteil 11 entgegen der Fahrtrichtung x mit einer an der Rückseite R des Einbauteils 11 angeordneten kastenrahmenartigen Aufnahme 30 voran in eine Aussparung A der Sitzlehnenkonstruktion K eingesetzt, wobei Befestigungsstellen 31 des Einbauteils 11 mit Befestigungsstellen 32 der Sitzlehnenkonstruktion K gegebenenfalls leicht lösbar (z.B. nach Art einer Steck- oder Drehriegelanordnung) kooperieren.

Gemäß Fig. 3 kann zusätzlich ein Montagerahmen 38 vorgesehen sein. Dieser kann an der rückwärtigen Fläche der Rückwand (bei K) der Sitzlehne L, z.B. als Schraubwiderlagerplatte, angeordnet sein, deren Befestigungslöcher 39 mit Befestigungslöchern 40 des Einbauteils 11 fluchten.

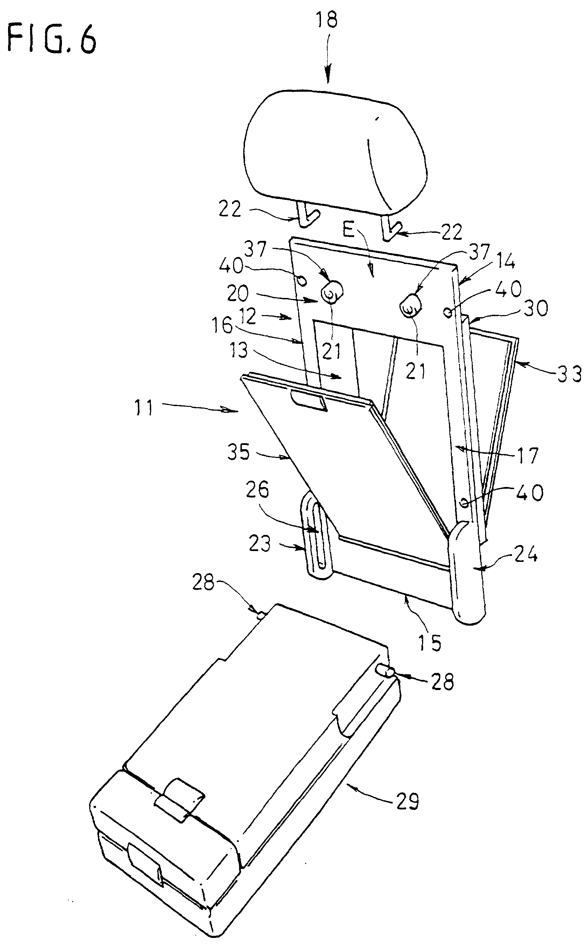

Wie anhand der Fig. 6-8 vorstellbar, kann der Montagerahmen 38 selbst die Aussparung A bilden und eine gesonderte Sitzlehnenkonstruktion K für den mittleren Lehnenbereich zwischen zwei einzelnen Sitzlehnen L völlig ersetzen. Bei einem solchen Anwendungsfall wird der Montagerahmen 38 seitlich zwischen den beiden einzelnen Sitzlehnen L befestigt. Zur Montage der Einheit 11 werden sodann die Befestigungslöcher 39, 40 herangezogen.

Die kastenrahmenartige Aufnahme 30 ist mittels eines vom Lade- bzw. Kofferraum 34 her bedienbaren Deckels 33 zu verschließen.

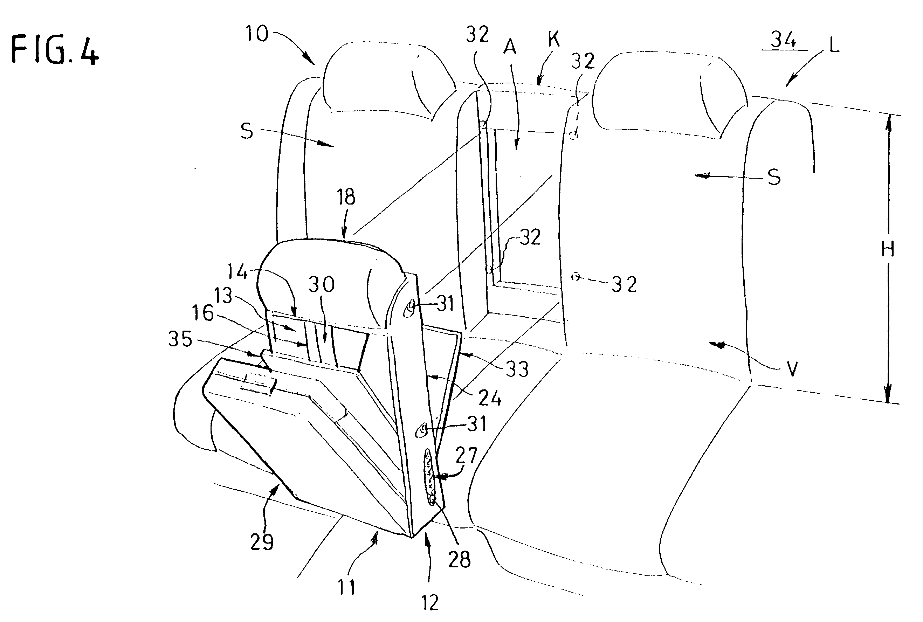

Im Zusammenhang der Fig. 4, 5, 9 und 10 wird deutlich, daß das Einbauteil 11 sich im wesentlichen über die gesamte Höhe H der Sitzlehne L erstreckt. Dabei kann in nicht dargestellter Weise das Einbauteil 11 unter Einbeziehung des Ausstattungsteils die Sitzlehnen-Hauptfläche S ergänzen.

Dies bedeutet, daß das Ausstellungsteil die Sitzlehnen-Hauptfläche nur mit einem Anteil ergänzt und der außerdem noch zu ergänzende Restanteil von einem anderen Bereich (z.B. von einer Polsterfläche) des Einbauteils bereitgestellt wird.

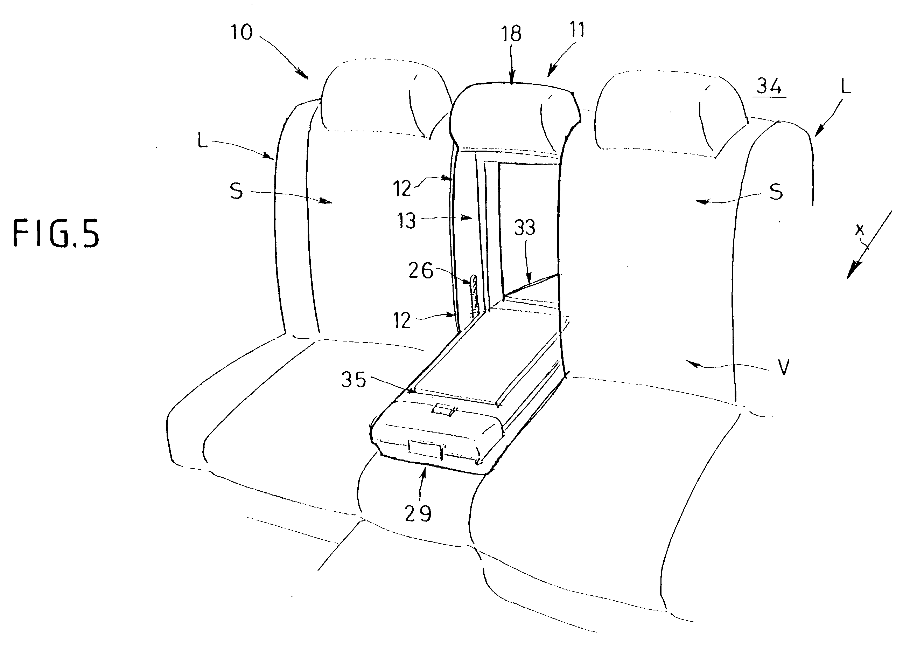

Im Unterschied dazu ergänzt das Einbauteil, wie in den Zeichnungen dargestellt, allein mit dem Ausstattungsteil in Form der Armlehne 29 die Sitzlehnen-Hauptfläche S über die gesamte Höhe H der Sitzlehne L. Dies wird deutlich, wenn man sich, was nicht dargestellt, anhand von Fig. 5 die Armlehne 29 hochgeklappt vorstellt.

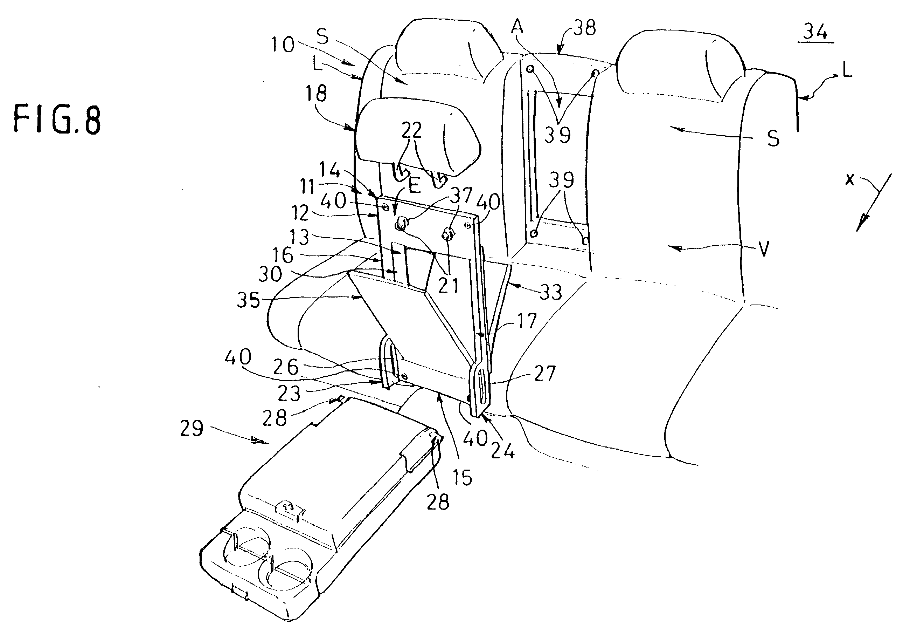

Die Armlehne 29 kann in an sich bekannter Weise noch zusätzliche Funktionen, wie z.B. eine behälterartige Aufnahmefunktion für medizinische Utensilien oder für einen aufklappbaren Becherhalter (vgl. Fig. 8) enthalten.

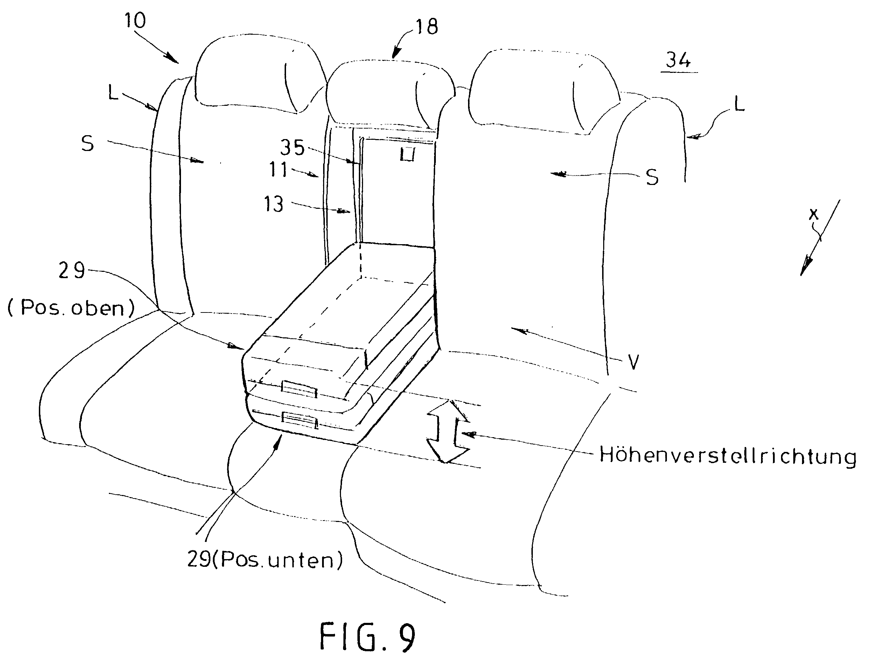

Anhand von Fig. 9 ist vorstellbar, daß die Armlehne 29 in verschiedene Höheneinstellpositionen versetzbar und dabei lösbar arretierbar ist. Für den Fall, daß aus der kastenrahmenartigen Aufnahme 30, der auch ein vorderer Verschlußdeckel 35 zugeordnet sein kann, als zusätzliches Ausstattungsteil des Einbauteils 11 ein Durchladebehälter 36, z.B. in Form eines Skisacks, ausgezogen werden soll, wird die Armlehne 29 in ihre unterste Verstellposition versetzt. Die Halterungsaussparung 13 bildet dabei zugleich die Durchladeaussparung, die gemeinsam mit der Aussparung A der Sitzlehnenkonstruktion K einen Durchladekanal begrenzt.

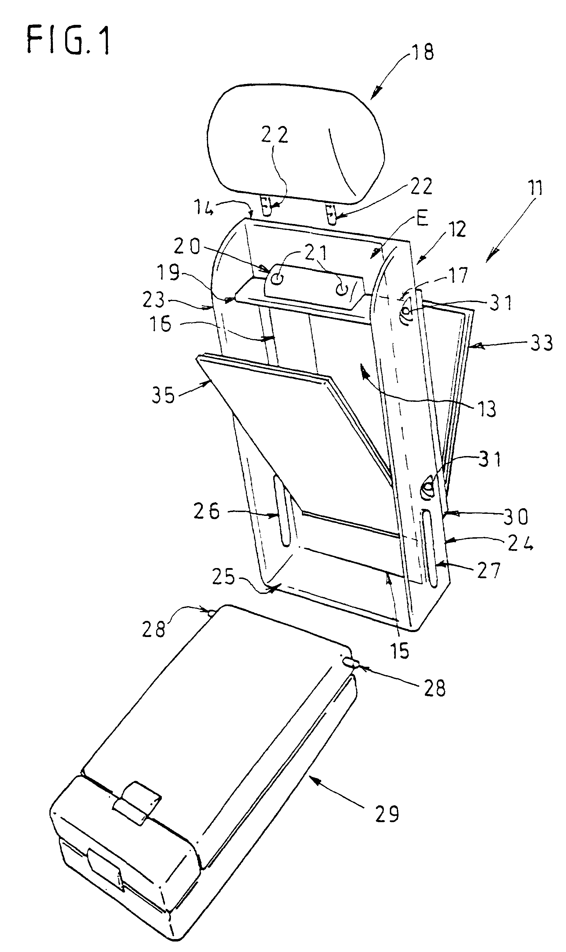

Die baulichen Unterschiede bezüglich der in den Fig. 1 und 6 dargestellten Einbauteile 11 bestehen im wesentlichen darin, daß das Einbauteil 11 gemäß Fig. 6 nur sehr kurze Seitenwangen 23, 24 im jeweiligen unteren Bereich der Längsschenkel 16, 17 aufweist.

Außerdem sind gemäß Fig. 6 im Unterschied zur Darstellung gemäß Fig. 1 die Tragstangen 22 der Kopfstütze 18 abgewinkelt. Demzufolge ist gemäß Fig. 6 die Steckhalterung 20 mit senkrecht auf dem oberen Querschenkel 14 aufgesetzt befestigten, die Steckkanäle 21 beinhaltenden Steckbuchsen 37 versehen.

## Patentansprüche

1. Sitzanordnung (10) für Fahrzeuge, mit einem mindestens einer Sitzlehne (L) zugeordneten, mindestens mittelbar an der Sitzlehne (L) befestigten, eine Halterungsaussparung (13), wie eine Durchladeaussparung einer Durchladeeinrichtung (36) od. dgl., bildenden, als gesonderte Einheit einsetzbaren, modulartigen Einbauteil (11), wobei die Halterungsaussparung (13) bei deren Nichtgebrauch mittels eines Ausstattungsteils (29) etwa bündig mit der Sitzlehnen-Hauptfläche (S) verschließbar ist, sowie mit einer mindestens mittelbar an der Sitzlehne (L) gehaltenen Kopfstütze (18), **dadurch gekennzeichnet, daß** das Einbauteil (11) sich im wesentlichen über die gesamte Höhe (H) der Sitzlehne (L) erstreckt und daß das Einbauteil (11) eine Halterungsstruktur für die Kopfstütze (18) bildet.

2. Sitzanordnung nach Anspruch 1, **dadurch gekennzeichnet, daß** das Einbauteil (11) unter Einbeziehung des Ausstattungsteils (29) die Sitzlehnen-Hauptfläche (S) über die gesamte Höhe (H) der Sitzlehne (L) ergänzt.

3. Sitzanordnung nach Anspruch 1 oder nach Anspruch 2, **dadurch gekennzeichnet, daß** das Einbauteil (11) allein mit dem Ausstattungsteil (29) die Sitzlehnen-Hauptfläche (S) über die gesamte Höhe (H) der Sitzlehne (L) ergänzt.

4. Sitzanordnung nach einem der Ansprüche 1 bis 3, **dadurch gekennzeichnet, daß** das Ausstattungsteil eine Armlehne (29) ist.

5. Sitzanordnung nach Anspruch 4, **dadurch gekennzeichnet, daß** die Armlehne (29) zwischen einer die Halterungsaussparung (13) freigebenden Betriebsposition und einer die Halterungsaussparung (13) verschließenden Ruheposition in einer vertikalen Ebene um eine Schwenkachse (28) herum klappbar angeordnet ist.

6. Sitzanordnung nach Anspruch 5, **dadurch gekennzeichnet, daß** die Armlehne (29) in ihrer Gebrauchsstellung mittels ihrer Schwenkachse (28) höhenverstell- und arretierbar ist.

7. Sitzanordnung nach einem der Ansprüche 1 bis 6, **dadurch gekennzeichnet, daß** das Einbauteil (11) einen die Halterungsaussparung (13) umgebenden Rahmen (12) bildet.

8. Sitzanordnung nach Anspruch 7, **dadurch gekennzeichnet, daß** der Rahmen (12) zwei im Parallelabstand voneinander distanzierte horizontale Querschenkel (14, 15), einen unteren (15) und einen oberen (14) Querschenkel, bildet, welche mittels zweier im Parallelabstand voneinander angeordneter Längsschenkel (16, 17) miteinander verbunden sind.

9. Sitzanordnung nach Anspruch 8, **dadurch gekennzeichnet, daß** dem oberen Querschenkel (14) ein Einbaufeld (E) zur Befestigung der Kopfstütze (18) zugeordnet ist.

10. Sitzanordnung nach Anspruch 9, **dadurch gekennzeichnet, daß** das Einbaufeld (E) eine Steckhalterung (20) für mindestens eine Kopstützentragstange (22) bildet.

11. Sitzanordnung nach einem der Ansprüche 1 bis 10, **dadurch gekennzeichnet, daß** der Rahmen (12) ein Grundbauteil in Form eines sich im wesentlichen in einer Ebene erstreckenden plattenförmigen Bauteils darstellt.

12. Sitzanordnung nach einem der Ansprüche 8 bis 11, **dadurch gekennzeichnet, daß** die Längsschenkel (17, 18) zwei parallel angeordnete Seitenwangen (23, 24) bilden.

13. Sitzanordnung nach Anspruch 12, **dadurch gekennzeichnet, daß** die unteren Enden der beiden Seitenwangen (23, 24) mittels einer Querwange (25) verbunden sind.

14. Sitzanordnung nach einem der Ansprüche 6 bis 13, **dadurch gekennzeichnet, daß** die beiden Seitenwangen (23, 24) eine Höhenverstelleinrichtung für die Schwenkachse (28) der Armlehne (29) bilden.

15. Sitzanordnung nach einem der Ansprüche 1 bis 14, **dadurch gekennzeichnet, daß** der obere Bereich des Einbauteils (11) einen Aufnahmeraum (bei E) für die in ihrer untersten Stellung befindliche Kopfstütze (18) bildet.

16. Sitzanordnung nach einem der Ansprüche 1 bis 15, **dadurch gekennzeichnet, daß** das Einbauteil (11) eine von der Sitzlehnen-Hauptfläche (S) weg rückwärts weisende, etwa kastenrahmenartige Aufnahme (30) für ein einzubauendes bzw. anzubauendes Ausstattungsteil, wie z.B. für einen Durchlade-Behältersack (36), bildet.

17. Sitzanordnung nach einem der Ansprüche 1 bis 16, **dadurch gekennzeichnet, daß** die Sitzlehnenkonstruktion (K) eine Aussparung (A) bildet, welche mindestens einen Teilhöhenbereich (bei 30) des Einbauteils (11) aufnimmt.

18. Sitzanordnung nach einem der Ansprüche 1 bis 16, **dadurch gekennzeichnet, daß** das Einbauteil (11) die komplette Tragkonstruktion für eine sich über die gesamte Sitzlehnenhöhe (H) erstreckende, eine diskrete Baugruppe darstellende, Teilsitzlehne bildet.

## Claims

1. Seat arrangement (10) for vehicles, having a module-type mounting part (11) which is assigned to at least one seat back (L), is fastened at least indirectly to the seat back (L), forms a holding opening (13), such as a through-load opening of a through-load facility (36) or the like, and can be inserted as a separate unit, the holding opening (13) when not in use being closable by means of a fitting (29) so as to be approximately flush with the main seat-back surface (S), and also having a headrest (18) held at least indirectly on the seat back (L), **characterised in that** the mounting part (11) extends substantially over the entire height (H) of the seat back (L) and **in that** the mounting part (11) forms a holding structure for the headrest (18).

2. Seat arrangement according to Claim 1, **characterised in that** the mounting part (11), with inclusion of the fitting (29), completes the main seat-back surface (S) over the entire height (H) of the seat back (L).

3. Seat arrangement according to Claim 1 or according to Claim 2, **characterised in that** the mounting part (11), solely with the fitting (29), completes the main seat-back surface (S) over the entire height (H) of the seat back (L).

4. Seat arrangement according to one of Claims 1 to 3, **characterised in that** the fitting is an armrest (29).

5. Seat arrangement according to Claim 4, **characterised in that** the armrest (29) is arranged so as to be swingable in a vertical plane about a pivot shaft (28) between an operating position freeing the holding opening (13) and a rest position closing the holding opening (13).

6. Seat arrangement according to Claim 5, **characterised in that** in its use position the armrest (29) is height-adjustable and lockable by means of its pivot shaft (28).

7. Seat arrangement according to one of Claims 1 to 6, **characterised in that** the mounting part (11) forms a frame (12) surrounding the holding opening (13).

8. Seat arrangement according to Claim 7, **characterised in that** the frame (12) forms two horizontal transverse members (14, 15) spaced apart parallel to each other, a lower transverse member (15) and an upper transverse member (14), these being connected to each other by means of two longitudinal members (16, 17) spaced apart parallel to each other.

9. Seat arrangement according to Claim 8, **characterised in that** the upper transverse member (14) is assigned a mounting area (E) for fastening the headrest (18).

10. Seat arrangement according to Claim 9, **characterised in that** the mounting area (E) forms a plug-in holder (20) for at least one headrest-supporting bar (22).

11. Seat arrangement according to one of Claims 1 to 10, **characterised in that** the frame (12) constitutes a basic component in the form of a plate-shaped component extending substantially in one plane.

12. Seat arrangement according to one of Claims 8 to 11, **characterised in that** the longitudinal members (17, 18) form two parallel lateral walls (23, 24).

13. Seat arrangement according to Claim 12, **characterised in that** the lower ends of the two lateral walls (23, 24) are connected by means of a transverse wall (25).

14. Seat arrangement according to one of Claims 6 to 13, **characterised in that** the two lateral walls (23, 24) form a height-adjusting device for the pivot shaft (28) of the armrest (29).

15. Seat arrangement according to one of Claims 1 to 14, **characterised in that** the upper region of the mounting part (11) forms a receiving space (at E) for the headrest (18) situated in its lowest position.

16. Seat arrangement according to one of Claims 1 to 15, **characterised in that** the mounting part (11) forms an approximately box frame-like receptacle (30), directed rearwards away from the main seat-back surface (S), for a fitting to be built in or built on, such as, for example, for a through-load container bag (36).

17. Seat arrangement according to one of Claims 1 to 16, **characterised in that** the seat-back structure (K) forms an opening (A) which receives at least a partial height region (at 30) of the mounting part (11).

18. Seat arrangement according to one of Claims 1 to 16, **characterised in that** the mounting part (11) forms the complete supporting structure for a partial seat back extending over of the entire seat-back height (H) and constituting a discrete assembly.

## Revendications

1. Siège (10) pour véhicules avec une partie à monter (11), modulaire, associée au moins à un dossier (L), fixée au moins indirectement sur le dossier de siège (L), utilisable sous la forme d'ensemble séparé, formant un évidement de fixation (13), tel qu'un évidement de passage de chargement d'un dispositif à passage de chargement (36) ou analogue, l'évidement de fixation (13), lors de sa non-utilisation, étant susceptible d'être fermé au moyen d'une pièce d'équipement (29) à peu près de façon affleurée avec la face principale de dossier de siège (S), ainsi qu'avec un appui-tête (18) maintenu au moins indirectement sur le dossier de siège (L), **caractérisé en ce que** la pièce à monter (11) s'étend sensiblement sur la totalité de la hauteur (H) du dossier de siège (L), et **en ce que** la pièce à monter (11) forme une structure de fixation pour l'appui-tête (18).

2. Siège selon la revendication 1, **caractérisé en ce que** la pièce à monter (11) complète la face principale de dossier de siège (S) sur toute la hauteur (H) du dossier de siège (L), en faisant intervenir la pièce d'équipement (29).

3. Siège selon la revendication 1 ou la revendication 2, **caractérisé en ce que** la pièce à monter (11) seule, avec la partie d'équipement (29), complète la face principale de dossier de siège (S) sur toute la hauteur (H) du dossier de siège (L).

4. Siège selon l'une des revendications 1 à 3, **caractérisé en ce que** la pièce d'équipement est un accoudoir (29).

5. Siège selon la revendication 4, **caractérisé en ce que** l'accoudoir (29) est disposé de façon à pouvoir basculer dans un plan vertical, autour d'un axe de pivotement (28), en se déplaçant dans un plan vertical, entre une position de fonctionnement, libérant l'évidement de fixation (13), et une position de repos, obturant l'évidement de fixation (13).

6. Siège selon la revendication 5, **caractérisé en ce que** l'accoudoir (29) est susceptible d'être réglé en hauteur et d'être bloqué à sa position d'utilisation, à l'aide de son axe de pivotement (28).

7. Siège selon l'une des revendications 1 à 6, **caractérisé en ce que** la pièce à monter (11) forme un cadre (12) entourant l'évidement de fixation (13).

8. Siège selon la revendication 7, **caractérisé en ce que** le cadre (12) forme deux branches transversales (14, 15) horizontales, espacées l'une de l'autre parallèlement et à distance, une branche transversale inférieure (15) et une branche transversale supérieure (14), qui sont reliées ensemble à l'aide de deux branches longitudinales (16, 17) disposées parallèlement et à distance l'une de l'autre.

9. Siège selon la revendication 8, **caractérisé en ce qu'**à la branche transversale supérieure (14) est associée un champ de montage (E) pour la fixation de l'appui-tête (18).

10. Siège selon la revendication 9, **caractérisé en ce que** le champ de montage (E) forme une fixation par emboîtement (20), pour au moins une tige support d'appui-tête (22).

11. Siège selon l'une des revendications 1 à 10, **caractérisé en ce que** le cadre (12) est un composant de base réalisé sous la forme d'un composant en forme de plaque, s'étendant sensiblement dans un plan.

12. Siège selon l'une des revendications 8 à 11, **caractérisé en ce que** les branches longitudinales (17, 18) forment deux joues latérales (23, 24) disposées parallèlement.

13. Siège selon la revendication 12, **caractérisé en ce que** les extrémités inférieures des deux joues latérales (23, 24) sont reliées au moyen d'une joue transversale (25).

14. Siège selon l'une des revendications 6 à 13, **caractérisé en ce que** les deux branches latérales (23, 24) forment un dispositif de réglage en hauteur pour l'axe de pivotement (28) des accoudoirs (29).

15. Siège selon l'une des revendications 1 à 14, **caractérisé en ce que** la zone supérieure de la pièce à monter (11) forme un espace de logement (en E) pour l'appui-tête (18) se trouvant à sa position la plus basse.

16. Siège selon l'une des revendications 1 à 15, **caractérisé en ce que** la pièce à monter (11) forme un logement (30) à peu près du genre d'un cadre en caisson, tourné vers l'arrière en s'écartant de la face principale de dossier de siège (S), pour une pièce d'équipement à intégrer au montage, respectivement à rapporter au montage, tel que, par exemple, un sac formant récipient permettant un chargement traversant (36).

17. Siège selon l'une des revendications 1 à 16, **caractérisé en ce que** la construction de dossier de siège (K) forme un évidement (A), recevant au moins une zone de hauteur partielle (en 30) de la pièce à monter (11).

18. Siège selon l'une des revendications 1 à 16, **caractérisé en ce que** la pièce à monter (11) forme la construction support complète pour un dossier de siège partiel, s'étendant sur la totalité de la hauteur de dossier de siège (H) et formant un groupe de construction discret.
